# EUROPEAN PATENT SPECIFICATION

(11) **EP 2 070 022 B1**
(45) Date of publication and mention of the grant of the patent: **23.12.2009**
(21) Application number: 07868303.4
(22) Date of filing: 07.06.2007
(51) Int. Cl.: G06K 19/077

(54) **LAMINATE DEVICE HAVING VOIDED STRUCTURE FOR CARRYING ELECTRONIC ELEMENT, SUCH AS LABEL FOR RFID TAG**
LAMINIERUNGSVORRICHTUNG MIT LÜCKENHAFTER STRUKTUR ZUM TRAGEN EINES ELEKTRONISCHEN ELEMENTS, WIE Z. B. EINES ETIKETTS FÜR EINEN RFID-TAG
DISPOSITIF STRATIFIÉ COMPRENANT UNE STRUCTURE ÉVIDÉE POUR Y LOGER UN ÉLÉMENT ÉLECTRONIQUE, COMME UNE ÉTIQUETTE DE TYPE RFID

(30) Priority: 09.06.2006 US 811829 P
(43) Date of publication of application: 17.06.2009
(73) Proprietor: Arjobex America, Charlotte NC 28273 (US)
(72) Inventor: YADAV, Vijay, Charlotte, NC 28277 (US); KALKUNTE, Ravi, Charlotte, NC 28262 (US); NEIL, Stuart, Colchester Essex C04 5WJ (GB)
(74) Representative: Raynor, Simon Mark
(86) International application number: PCT/US2007/070637
(87) International publication number: WO 2008/060708

(56) References cited:
- EP-A- 1 211 634
- US-B1- 6 297 727

## Description

### FIELD OF THE INVENTION

The invention concerns a laminate device for carrying and protecting an electronic element such as a label carrying an RFID tag.

### BACKGROUND ART

Various RFID label-type devices are used to tag objects so as to identify them using radiofrequency identification (RFID) systems. Typically, the devices or labels include a substrate such as a paper label, and a RFID element is attached to the label, for example, by sticking it to the adhesive of the label, or by inserting the RFID element under the adhesive. Such a label is described in document US-A-6 297 727.

Instead of paper, plastic materials have been used for the substrate. However, a difficulty of non-paper materials is that many plastic materials offer insufficient printability. Another difficulty is that plastic materials may not offer similar protection as paper for the RFID tag, so that the chip or antenna is damaged easily, or the plastic substrate may be too expensive to manufacture, so that the label is not cost-effective for mass production.

### SUMMARY OF THE INVENTION

The present invention is intended to remedy some or all of such deficiencies and provide a laminated device carrying an electronic element, such as an RFID label, that can offer good printability as well as resistance to physical impacts and electrostatic discharge.

The present invention concerns a laminate device according to claim 1.

Other aspects of the present invention are indicated in the dependent claims. It is understood that the features of a particular dependent claim would be applicable to the present invention in its various aspects.

Other features and advantages of the invention will appear in the following description of particular embodiments.

### BRIEF DESCRIPTION OF THE DRAWINGS

Fig. 1 is a schematic cross-section view of an example of embodiment of a device according to the present invention, in the form of an RFID label.
Fig. 2 is a schematic cross-section view of another example of embodiment of a device according to the present invention.

### DESCRIPTION OF PARTICULAR EMBODIMENTS

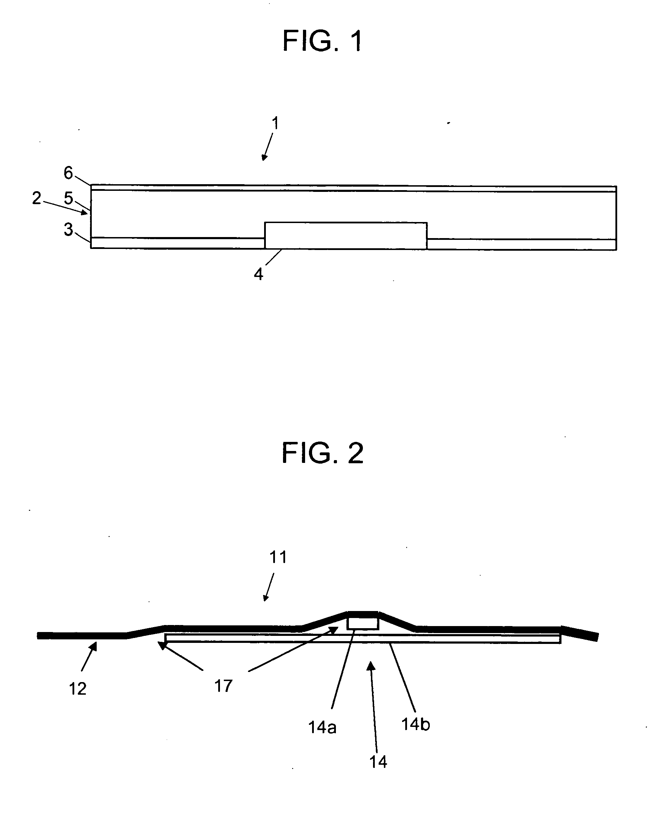

An illustrative laminated device according to the present invention is shown in Fig. 1 in the form of a label 1 which includes a substrate 2 having an adhesive layer 3 on its back face. An electronic element 4 such as an RFID tag or inlay (chip and antenna) is provided in the adhesive layer and back face of the substrate. The substrate includes a substrate layer 5 and a coating layer 6 on at least its front face. The substrate layer has a voided structure such as microvoids. The chip or the inlay is, for example, embedded in a recess of the substrate or by localized compression of the voided structure. In a variant, the adhesive layer covers substantially the back face of the substrate and the chip is attached to the outside or inside face of the adhesive. The chip or the inlay can be embedded in the adhesive layer or in the substrate, or both.

Another embodiment of the present invention is substantially similar to the embodiment of Fig. 1 except that the RFID tag is located under the adhesive of the adhesive layer, i.e., between the material of the substrate and the material of the adhesive layer.

In an alternative, the electronic element can be provided within in the substrate, for example, enclosed within a single ply or embedded within or between two or more plies of the substrate.

In a variant of the invention, de device is a label 11, as shown on Fig. 2. The substrate 12 or one or more layers of the substrate cover an RFID inlay 14 comprising a silicon chip 14a and an antenna (not shown) with a back plate support 14b, for example made of PET. An adhesive layer is not shown on Fig. 2. The adhesive layer can be present in the form of a pressure sensitive adhesive, for example, applied to the back face of the substrate, the inlay, or both, and covered by a release liner. According to the invention, air gaps 17 and surface unevenness can be reduced.

The microvoided structure of the substrate layer and the coating layer provide good printability of the front surface of the label, while at the same time, considerable resistance to physical impact and electrostatic discharge is available, in particular as compared to a conventional paper label.

More specifically, the substrate layer is advantageously a polyolefin-based film, or, for example, a stretched multicellular plastic film, such as a polyethylene-based film. A voided structure with a substantial proportion of unconnected voids makes it possible to provide cushioning property and electrostatic discharge and impact protection. In this manner, a flattened printable surface is provided, while the electronic element is protected effectively by the substrate, and can be embedded locally, partially or completely, in the substrate. The unconnected voids in the substrate layer can constitute at least about 50% of the voids in volume, for example, about 60%, 70%, 75%, 80%, 90%, or substantially about all voids in a portion of the substrate layer such as a sublayer, or in the substrate layer as a whole. The substrate layer can also be a lamination of several plastic films, for example, each film having a voided structure, one of which with unconnected voids.

In some embodiments, the density of the substrate can be adjusted to at least about 0.5 g/cm³, for example, about 0.6 to about 0.9 g/cm³, more preferably about 0.75 to about 0.85 g/cm³. For example, voiding is up to about 50%, preferably about 10 to about 40%, more preferably about 15 to about 25%. Also, a thickness of the substrate or substrate layer can be at least about 250 microns, and preferably, for example, at least about 300 microns, for example, at least about 350 microns, and/or at most about 500 microns, for example, from about 300 to about 400 microns (ASTM D645-92). Basis weight of the substrate or of at least one layer of the substrate is advantageously about 180 to about 320 g/m², preferably about 240 to about 300 g/m², for example, about 240 g/m², or about 280 g/m² (ASTM D646-92(95)).

Without limitation as to reasons for improved resistance to physical impact and electrostatic discharge of the laminated device of the present invention, the voided structure of the substrate layer is believed at least in some cases to dampen impacts and insulate the electronic element, alone, by way of an unconnected voided structure, or in combination with the coating layer on at least one face of the substrate. The electronic element can be partially or completely embedded in the substrate. Thus, the laminated device of the present invention can provide both excellent printability with a substantially flat printing surface and excellent protection of the electronic element against physical impacts and electrostatic discharge.

The coating layer can be designed to improve properties of the substrate, such as printability and/or protection. In a particular embodiment, the coating is a non-voided coating layer, for example, an inorganic layer such as a talc-based layer adapted to receive printed information by various printing processes.

A voided substrate may be obtained for example using processes and techniques as described in patent documents GB1470372 and GB1442113.

In the present invention, a laminated device can have resistance to electrostatic discharge in accordance with strict military standards, such as MIL-STD-331B, which requires maintaining 100% operability under the testing conditions. Of course, the present invention is not limited to this standard, and is also intended to cover laminated device designed for other uses. In particular, most commercial uses for RFID labels will not require meeting the military norm. For example, it may be sufficient if the labels meet a less strict test, or if less labels among a group of labels remain operational under the military norm, for example, at least 85%, or at least 95%.

Surface resistivity is selected advantageously to be at most about 10¹⁴ Ω/sq, and preferably less than 10¹⁴ Ω/sq, more preferably in a range of about 10¹⁰ to about 10¹² Ω/sq (per ASTM D-257).

Advantageously, additional properties of the product are selected in order to obtain a resistant and easily usable device according to the intended use. For example, tensile strength in machine direction, transverse direction, or both, may be selected in a range of about 3000 to 6000 PSI, preferably about 4,500 to about 5,500 PSI, for example about 5,000 PSI (ASTM D638-95). In a particular embodiment, tensile strength is 4,930 PSI in the machine direction and 3,770 PSI in the transverse direction. Similarly, elongation is advantageously selected in the range of about 100 to about 150%, preferably about 110 to about 130%, for example, about 120% (ASTM D638-95). In a particular embodiment, elongation is 120% in the machine direction and 100% in the transverse direction. Also similarly, tear strength is advantageously from about 350 to about 650 lbs/in, preferably about 450 to about 550 lbs/in (ASTM 1004-66). In a particular embodiment, tear strength is 470 lbs/in in the machine direction and 570 lbs/in in the transverse direction.

### Examples

In these comparative tests, various plastic substrates with inlays from a range of manufacturers were investigated.

### 1. Electrostatic discharge test

The electrodischarge test was performed using the following conditions in order to meet MIL-STD-331B:
- 2 positive and 2 negative 25 kV discharges, 2 hits above chip and 2 above antenna, 10mm from label edge.
- 3 mm air gap between probe and label surface
- 500-ohm resistor for maximum energy release
- 45 % Relative humidity. 22°C

Three RFID inlay types were used. These are detailed below:
- Alien. Gen. 1 Squiggle
- Impinj Gen 2 ESTI
- Texas Instruments. Gen 2

Twenty (20) labels of each substrate type were tested. They were all assessed for read strength before and after testing.

The assessment is carried out at a distance of 1 m from 2 circular antennae placed 500mm apart.

A read strength of 16 is the highest possible and equates to a read distance of approximately 3 metres. A read strength of 1 is the lowest possible and equates to a read distance of 1m. The read range figures have no units and are purely for comparative purposes. Any label that cannot be read at 1m with maximum signal strength of 2W is considered dead.

The different inlays have different inherent read strengths before testing. We are more concerned with the loss in read strength as a result of testing. Any label that has a loss in read strength of up to 5 units after testing is considered 'fit for use'.

The table below shows the substrates used and their physical properties. The following table shows the results of the ESD testing. The LD 200 Black substrate had a layer of black TT ink printed onto the back surface.

| Substrate Type | Substance (g/m²) | Thickness (micron) |
|---|---|---|
| LD 240 | 240 | 365 |
| LD 200 | 200 | 305 |
| P 285 | 285 | 355 |
| P 240 | 240 | 300 |
| Teslin | 255 | 310 |

| | | Read Range | | Number of Labels: | | | | |
|---|---|---|---|---|---|---|---|---|
| Substrate | Inlay | Mean before test | Mean after test | Dead | Loss 11-15 | Loss 6-10 | Loss 1-5 | No Change |
| LD 240 | Alien | 11.6 | 3.9 | 10 | 0 | 4 | 1 | 5 |
| LD 240 | Impinj | 15.3 | 12.0 | 3 | 1 | 1 | 1 | 14 |
| LD 240 | TI | 12.9 | 5.5 | 9 | 0 | 2 | 3 | 6 |
| LD 200 | Alien | 11.4 | 0.4 | 18 | 0 | 2 | 0 | 0 |
| LD 200 | Impinj | 15.7 | 1.5 | 16 | 2 | 0 | 2 | 0 |
| LD 200 | TI | 13.2 | 0.9 | 14 | 5 | 0 | 1 | 0 |
| LD 200 Black | Alien | 11.0 | 2.3 | 13 | 0 | 2 | 5 | 0 |
| P 285 | Alien | 12.6 | 2.9 | 12 | 1 | 3 | 4 | 0 |
| P 285 | Impinj | 15.6 | 11.1 | 2 | 2 | 2 | 5 | 9 |
| **P 285** | **TI** | **13.9** | **13.4** | **0** | **0** | **0** | **11** | **9** |
| P 240 | Alien | 11.4 | 1.1 | 16 | 1 | 2 | 1 | 0 |
| P 240 | Impinj | 14.9 | 13.2 | 1 | 0 | 0 | 9 | 10 |
| **P 240** | **TI** | **12.9** | **12.9** | **0** | **0** | **0** | **0** | **20** |
| Teslin | Alien | 11.9 | 3.3 | 13 | 0 | 2 | 3 | 2 |
| Teslin | Impinj | 15.4 | 12.6 | 2 | 0 | 1 | 7 | 10 |
| Teslin | TI | 14.0 | 12.4 | 2 | 0 | 0 | 4 | 14 |

The substrate/ Inlay combinations that meet MIL-STD-331 are highlighted.

### 2. Physical impact test

Impact tests were carried out using their Gardner free-fall impact tester.

The label sample is placed between a solid steel base and the free-falling weight, which is a circular flat steel surface, 2 cm in diameter. A 1 kg mass is dropped from a height of 10 cm onto the front of the label directly above the chip.

The following are the results obtained for the 18 variables with 10 labels per variable.

| | | Read Range | | Number of Labels: | | | | |
|---|---|---|---|---|---|---|---|---|
| Substrate | Inlay | Mean before test | Mean after test | Dead | Loss 11-15 | Loss 6-10 | Loss 1-5 | No Change |
| LD 240 | Alien | 11.8 | 0 | 10 | 0 | 0 | 0 | 0 |
| LD 240 | Impinj | 15.5 | 5.6 | 6 | 0 | 0 | 4 | 0 |
| LD 240 | TI | 13.2 | 3.3 | 8 | 0 | 0 | 1 | 1 |
| LD 200 | Alien | 10.5 | 3.5 | 0 | 2 | 7 | 1 | 2 |
| LD 200 | Impinj | 15.6 | 2.7 | 8 | 0 | 0 | 2 | 0 |
| LD 200 | TI | 13.4 | 1.0 | 9 | 0 | 0 | 1 | 0 |
| P 285 | Alien | 12.4 | 3.5 | 8 | 0 | 0 | 2 | 0 |
| P 285 | Impinj | 15.8 | 9.6 | 3 | 0 | 0 | 6 | 1 |
| **P 285** | **TI** | **13.8** | **12.2** | **0** | **0** | **0** | **9** | **1** |
| P 240 | Alien | 11.4 | 0 | 10 | 0 | 0 | 0 | 0 |
| P 240 | Impinj | 14.3 | 3.6 | 6 | 0 | 1 | 3 | 0 |
| P 240 | TI | 13.8 | 5.5 | 7 | 0 | 0 | 2 | 1 |
| Teslin | Alien | 12.2 | 3.8 | 8 | 0 | 0 | 2 | 0 |
| Teslin | Impinj | 15.3 | 8.3 | 4 | 0 | 0 | 5 | 1 |
| Teslin | TI | 13.8 | 9.8 | 2 | 0 | 0 | 7 | 1 |

### 3. Discussion

The following observations can be made concerning the ESD test results:
1. Polyart P240 and P285 labels passed the demanding MIL-STD-33 B test in that 20 labels were able to survive a 25kV discharge under test conditions, such that all of the labels were fit for normal use afterwards.
2. Alien inlays were unable to meet the standard whilst TI and Impinj inlays offer a higher level of intrinsic protection so that the substrates were able to pass the test.
3. A direct comparison of LD 240 and P 240, both with the same substance, shows that the best ESD protection came with a higher density substrate.
4. The only substrate/inlay combination to exhibit a 100% pass rate in the impact tests was P285 with TI inlay, as indicated in the table.
5. The use of a black print layer on the LD 200 showed a marginal improvement in ESD protection over the standard LD 200. However as this test was done with Alien inlays the improvement found might be magnified if the TI inlay were used.

## Claims

1. Laminate device comprising:
a substrate (2) comprising at least one substrate layer (5), the substrate having a front face adapted to receive printed information,
an electronic element (4), and
an adhesive layer (3) disposed on a back face of the substrate (2)
such that the laminate device is adapted to be stuck to an object through at least a portion of the adhesive layer,
**characterised in that** the substrate layer (5) is a plastic material having a microvoided structure, wherein at least about 50% of the voids in volume are unconnected in the substrate layer.

2. Laminate device according to claim 1, wherein at least about 75% of the voids in volume are unconnected in the substrate layer (5).

3. Laminate device according to any of claims 1 to 2, wherein substantially about all voids are unconnected in the substrate layer (5).

4. Laminate device according to any of claims 1 to 3, wherein a substantial proportion of the voids in volume are unconnected in a portion of the substrate layer (5).

5. Laminate device according to claim 4, wherein substantially all voids are unconnected in a sublayer of the substrate layer (5).

6. Laminate device according to any of the preceding claims, wherein a non-voided coating layer (6) is provided on at least one face of the substrate layer (5).

7. Laminate device according to claim 6, wherein the coating layer (6) is a thin inorganic coating.

8. Laminate device according to any of claims 1 to 7, wherein the electronic device (4) is disposed on the back face of the substrate (2).

9. Laminate device according to claim 8, wherein the electronic device (4) is covered by adhesive of the adhesive layer (3).

10. Laminate structure according to any of claims 1 to 9, wherein a front face of the substrate layer (5) is a lamination of several plastic films each having a voided structure.

11. Laminate device according to any of claims 1 to 10, wherein the substrate (2) has a density of at least about 0.5 g/cm³ and a thickness of from about 300 to about 400 microns.

12. Laminate device according to any of the preceding claims, wherein the electronic element (4) is an RFID tag and the substrate (2) has an insulating microcellular structure such that, under electrodischarge testing according to MIL-STD-331B, at least about 85% of a group of labels remains operational.

13. Label according to claim 12, wherein at least about 95% of the group of labels remains operational.

14. Label according to claim 13, wherein 100% of the group of labels remains operational.

## Patentansprüche

1. Laminatvorrichtung, welche das Folgende umfasst:
ein Substrat (2), welches mindestens eine Substratschicht (5) umfasst, wobei das Substrat eine Vorderseite aufweist, die dafür geeignet ist, gedruckte Informationen aufzunehmen,
ein Elektronisches Element (4) und
eine Haftschicht (3), welche auf einer Rückseite des Substrats (2) angeordnet ist,
derart, dass die Laminatvorrichtung dafür geeignet ist, über zumindest einen Abschnitt der Haftschicht auf ein Objekt geklebt zu werden,
**dadurch gekennzeichnet, dass** es sich bei der Substratschicht (5) um ein Kunststoffmaterial handelt, welches eine Struktur mit Mikroporen aufweist, wobei mindestens 50% des Volumens der Poren in der Substratschicht nicht verbunden sind.

2. Laminatvorrichtung nach Anspruch 1, wobei mindestens 75% des Volumens der Poren in der Substratschicht (5) nicht verbunden sind.

3. Laminatvorrichtung nach Anspruch 1 oder 2, wobei im Wesentlichen alle Poren in der Substratschicht (5) nicht verbunden sind.

4. Laminatvorrichtung nach einem der Ansprüche 1 bis 3, ein wesentlicher Anteil des Volumens der Poren in einem Abschnitt der Substratschicht (5) nicht verbunden sind.

5. Laminatvorrichtung nach Anspruch 4, wobei im Wesentlichen alle Poren in einer Teilschicht der Substratschicht (5) nicht verbunden sind.

6. Laminatvorrichtung nach einem der vorhergehenden Ansprüche, wobei auf mindestens einer Seite der Substratschicht (5) eine porenfreie Beschichtung (6) bereitgestellt ist.

7. Laminatvorrichtung nach Anspruch 6, wobei es sich bei der Beschichtung (6) um eine dünne anorganische Beschichtung handelt.

8. Laminatvorrichtung nach einem der Ansprüche 1 bis 7, wobei die elektronische Vorrichtung (4) auf der Rückseite des Substrats (2) angeordnet ist.

9. Laminatvorrichtung nach Anspruch 8, wobei die elektronische Vorrichtung (4) mit Klebstoff der Haftschicht (3) bedeckt ist.

10. Laminatvorrichtung nach einem der Ansprüche 1 bis 9, wobei es sich bei der Vorderseite der Substratschicht (5) um ein Laminat aus verschiedenen Kunststofffilmen handelt, von welchen jede eine Struktur mit Poren aufweist.

11. Laminatvorrichtung nach einem der Ansprüche 1 bis 10, wobei das Substrat (2) eine Dichte von mindestens etwa 0,5 g/cm³ und eine Dicke von etwa 300 bis etwa 400 Mikrometer aufweist.

12. Laminatvorrichtung nach einem der vorhergehenden Ansprüche, wobei es sich bei dem elektronischen Element (4) um eine RFID-Markierung handelt und das Substrat (2) eine isolierende Mikrozellenstruktur aufweist, derart, dass in einem Elektroentladungstest gemäß MIL-STD-331B mindestens etwa 85% einer Gruppe von Etiketten funktionsfähig bleiben.

13. Etikett nach Anspruch 12, wobei mindestens 95% der Gruppe von Etiketten funktionsfähig bleiben.

14. Etikett nach Anspruch 13, wobei 100% der Gruppe von Etiketten funktionsfähig bleiben.

## Revendications

1. Dispositif stratifié comprenant :
un substrat (2) qui comprend au moins une couche de substrat (5), le substrat présentant une face avant apte à recevoir des informations imprimées,
un élément électronique (4), et
une couche adhésive (3) disposée sur une face arrière du substrat (2)
de telle sorte que le dispositif stratifié soit apte à être collé sur un objet par l'intermédiaire au moins d'une partie de la couche adhésive,
**caractérisé en ce que** la couche de substrat (5) est un matériau de matière plastique qui présente une structure avec des microcavités, dans laquelle au moins 50 % environ des cavités dans le volume ne sont pas reliées dans la couche de substrat.

2. Dispositif stratifié selon la revendication 1, dans lequel au moins 75 % environ des cavités dans le volume ne sont pas reliées dans la couche de substrat (5).

3. Dispositif stratifié selon l'une quelconque des revendications 1 à 2, dans lequel sensiblement presque toutes les cavités ne sont pas reliées dans la couche de substrat (5).

4. Dispositif stratifié selon l'une quelconque des revendications 1 à 3, dans lequel une proportion substantielle de cavités dans le volume ne sont pas reliées dans une partie de la couche de substrat (5).

5. Dispositif stratifié selon la revendication 4, dans lequel sensiblement toutes les cavités ne sont pas reliées dans une sous-couche de la couche de substrat (5).

6. Dispositif stratifié selon l'une quelconque des revendications précédentes, dans lequel une couche de revêtement sans cavité (6) est fournie sur au moins une face de la couche de substrat (5).

7. Dispositif stratifié selon la revendication 6, dans lequel la couche de revêtement (6) est un revêtement inorganique mince.

8. Dispositif stratifié selon l'une quelconque des revendications 1 à 7, dans lequel le dispositif électronique (4) est disposé sur la face arrière du substrat (2).

9. Dispositif stratifié selon la revendication 8, dans lequel le dispositif électronique (4) est couvert par l'adhésif de la couche adhésive (3).

10. Structure stratifiée selon l'une quelconque des revendications 1 à 9, dans laquelle une face avant de la couche de substrat (5) est une stratification de plusieurs couches de matière plastique, chacune d'elles présentant une structure avec des cavités.

11. Dispositif stratifié selon l'une quelconque des revendications 1 à 10, dans lequel le substrat (2) présente une densité au moins égale à 0,5 g/cm³ environ et une épaisseur comprise entre 300 micromètres environ et 400 micromètres environ.

12. Dispositif stratifié selon l'une quelconque des revendications précédentes, dans lequel l'élément électronique (4) est une étiquette RFID et le substrat (2) présente une structure microcellulaire isolante de telle sorte que, lors d'un essai de décharge électrostatique selon la norme MIL - STD - 331B, au moins 85 % environ d'un groupe d'étiquettes reste opérationnel.

13. Étiquette selon la revendication 12, dans laquelle au moins 95 % environ du groupe d'étiquettes reste opérationnel.

14. Étiquette selon la revendication 13, dans laquelle 100 % du groupe d'étiquettes reste opérationnel.
